(19) Europäisches Patentamt
European Patent Office
Office européen des brevets

(11) EP 4 488 334 A1

(12) EUROPEAN PATENT APPLICATION
published in accordance with Art. 153(4) EPC

(43) Date of publication:
**08.01.2025 Bulletin 2025/02**

(21) Application number: **22928975.6**

(22) Date of filing: **27.12.2022**

(51) International Patent Classification (IPC):
***C08L 69/00*** *(2006.01)* ***C08K 5/13*** *(2006.01)*
***C08K 5/521*** *(2006.01)* ***C08K 5/524*** *(2006.01)*
***C08L 63/00*** *(2006.01)* ***C08L 71/02*** *(2006.01)*

(52) Cooperative Patent Classification (CPC):
**C08K 5/13; C08K 5/521; C08K 5/524; C08L 63/00; C08L 69/00; C08L 71/02**

(86) International application number:
**PCT/JP2022/048267**

(87) International publication number:
**WO 2023/162460 (31.08.2023 Gazette 2023/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.02.2022 JP 2022029430**

(71) Applicant: **Mitsubishi Engineering-Plastics Corporation**
**Tokyo 105-0021 (JP)**

(72) Inventor: **AKATSUKA, Wataru**
**Hiratsuka-shi, Kanagawa 254-0016 (JP)**

(74) Representative: **Müller-Boré & Partner Patentanwälte PartG mbB**
**Friedenheimer Brücke 21**
**80639 München (DE)**

# (54) POLYCARBONATE RESIN COMPOSITION

(57) The polycarbonate resin composition comprising, relative to 100 parts by mass of a polycarbonate resin (A), 0.001 to 0.3 parts by mass of a triaryl phosphate (B) given by a specific formula (1), and 0.0012 to 0.12 parts by mass of a phenolic structure-bearing compound (C), wherein the phenolic structure-bearing compound (C) contains a specific amount of at least one selected from 2,4-di-tert-butylphenol, 2,2-bis(4-hydroxyphenyl)propane, cumylphenol, and 4-tert-butylphenol.



Processed by Luminess, 75001 PARIS (FR)

## Description

[Technical Field]

The present invention relates to a polycarbonate resin composition and more particularly relates to a polycarbonate resin composition that exhibits a favorable hue and an excellent resistance to moist heat discoloration, and to a molded article of this polycarbonate resin composition.

[Background Art]

Polycarbonate resin has excellent mechanical properties, e.g., impact resistance and so forth, and also have an excellent heat resistance, an excellent transparency, and so forth, and as a result are widely used in numerous applications, e.g., various optical components, components in electric and electronic equipment, automotive interior and exterior trim components, OA equipment components, sheet, mechanical components, building materials, and so forth.

In addition, in many instances functionalities are imparted by containing various additives, and these more highly functional polycarbonate resin compositions are used in numerous applications. For example, PTL 1 describes an invention in which the flowability of fiber-reinforced polycarbonate resin compositions is improved by the admixture of 5 to 15 mass% triphenyl phosphate in 85 to 95 mass% polycarbonate resin.

With the rapid development in recent years of greater functionality and higher performance by various devices and equipment, improvements in particular in the hue and resistance to moist heat discoloration of polycarbonate resin are strongly desired.

[Citation List]

[Patent Literature]

[PTL 1] Japanese Patent No. 3308657

[Summary of Invention]

[Technical Problem]

An object of (problem for) the present invention is to provide a polycarbonate resin composition that exhibits a favorable hue and an excellent resistance to moist heat discoloration.

[Solution to Problem]

As a result of extensive and intensive investigations in order to address this problem, the present inventor has made the present invention upon discovering that a favorable hue and an excellent resistance to moist heat discoloration are exhibited by a polycarbonate resin composition that contains a prescribed triaryl phosphate compound and a prescribed phenol in prescribed amounts for each.

The present invention relates to the polycarbonate resin composition and a molded article described in the following.

1. A polycarbonate resin composition comprising, relative to 100 parts by mass of a polycarbonate resin (A), 0.001 to 0.3 parts by mass of a triaryl phosphate (B) given by general formula (1) below and 0.0012 to 0.12 parts by mass of a phenolic structure-bearing compound (C),

    wherein the phenolic structure-bearing compound (C) comprises at least one selected from 2,4-di-tert-butylphenol, 2,2-bis(4-hydroxyphenyl)propane, 4-tert-butylphenol, and cumylphenol, and
    wherein the content is, relative to 100 parts by mass of the polycarbonate resin (A), 0.0012 to 0.12 parts by mass when containing 2,4-di-tert-butylphenol, 0.002 to 0.03 parts by mass when containing 2,2-bis(4-hydroxyphenyl)propane, 0.0012 to 0.01 parts by mass when containing 4-tert-butylphenol, or 0.0012 to 0.01 parts by mass when containing cumylphenol.

[C1]

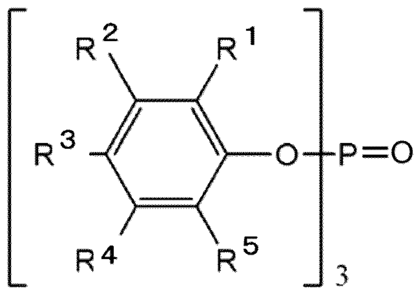

(1)

(In formula (1), $R^1$ to $R^5$ are each independently a hydrogen atom or a $C_{1-12}$ alkyl group.)

2. The polycarbonate resin composition of the preceding 1, wherein at least one of the $R^1$ to $R^5$ on each of aromatic rings in formula (1) is a $C_{1-12}$ alkyl group.
3. The polycarbonate resin composition of the preceding 1 or 2, wherein the $R^1$ and $R^3$ on each of the aromatic rings in formula (1) are a $C_{1-12}$ alkyl group, and the $R^2$, $R^4$ and $R^5$ on each of the aromatic rings are a hydrogen atom.
4. The polycarbonate resin composition of the preceding 3, wherein the $R^1$ and $R^3$ on each of the aromatic rings in formula (1) are a tert-butyl group, and the $R^2$, $R^4$ and $R^5$ on each of the aromatic rings are a hydrogen atom.
5. The polycarbonate resin composition of any one of the preceding 1 to 4, further comprising, per 100 parts by mass of the polycarbonate resin (A), 0.001 to 0.3 parts by mass of tris(2,4-di-tert-butylphenyl) phosphite.
6. The polycarbonate resin composition of any one of the preceding 1 to 5, further comprising 0.01 to 4.0 parts by mass of a polyalkylene glycol relative to 100 parts by mass of the polycarbonate resin (A).
7. The polycarbonate resin composition of any one of the preceding 1 to 6, further comprising 0.001 to 0.3 parts by mass of an arylphosphine or arylphosphine oxide relative to 100 parts by mass of the polycarbonate resin (A).
8. The polycarbonate resin composition of any one of the preceding 1 to 7, wherein the phenolic structure-bearing compound (C) further comprises 0.0017 to 0.01 parts by mass of phenol relative to 100 parts by mass of the polycarbonate resin (A), in addition to the at least one selected from 2,4-di-tert-butylphenol, 2,2-bis(4-hydroxyphenyl) propane, 4-tert-butylphenol, and cumylphenol.
9. A pellet comprising the polycarbonate resin composition of any one of the preceding 1 to 8.
10. A molded article comprising the polycarbonate resin composition of any one of the preceding 1 to 8.
11. A molded article provided by molding the pellet of the preceding 9.

[Advantageous Effects of Invention]

The polycarbonate resin composition according to the present invention exhibits a favorable hue and an excellent resistance to moist heat discoloration.

[Description of Embodiments]

In the following, embodiments, examples, and so forth are provided in order to describe the present invention in detail. Unless specifically indicated otherwise, in the present Description "to" in the specification of a numerical value range is used in the sense of including the numerical values provided before and after the "to" as the lower limit and upper limit.
The polycarbonate resin composition according to the present invention characteristically contains, relative to 100 parts by mass of a polycarbonate resin (A), 0.001 to 0.3 parts by mass of a triaryl phosphate (B) given by the aforementioned general formula (1) and 0.0012 to 0.12 parts by mass of a phenolic structure-bearing compound (C),

wherein the phenolic structure-bearing compound (C) includes at least one selected from 2,4-di-tert-butylphenol, 2,2-bis(4-hydroxyphenyl)propane, 4-tert-butylphenol, and cumylphenol, and
wherein the content is, relative to 100 parts by mass of the polycarbonate resin (A), 0.0012 to 0.12 parts by mass when containing 2,4-di-tert-butylphenol, 0.002 to 0.03 parts by mass when containing 2,2-bis(4-hydroxyphenyl)propane, 0.0012 to 0.01 parts by mass when containing 4-tert-butylphenol, or 0.0012 to 0.01 parts by mass when containing cumylphenol.

[Polycarbonate Resin (A)]

The polycarbonate resin (A) used in the present invention is not particularly limited and various kinds of polycarbonate resin may be used. Polycarbonate resin can be classified into aromatic polycarbonate resin, in which each of the carbons directly bonded to the carbonate bond is an aromatic carbon, and aliphatic polycarbonate resin, in which they are aliphatic carbons, and either of these can be used. Aromatic polycarbonate resin is preferred therebetween for the polycarbonate resin (A) considering, for example, the heat resistance, mechanical properties, and electrical properties.

Of the monomers comprising the starting materials for aromatic polycarbonate resin, aromatic dihydroxy compounds can be exemplified by the following:

dihydroxybenzenes, e.g., 1,2-dihydroxybenzene, 1,3-dihydroxybenzene (i.e., resorcinol), and 1,4-dihydroxybenzene; dihydroxybiphenyls, e.g., 2,5-dihydroxybiphenyl, 2,2'-dihydroxybiphenyl, and 4,4'-dihydroxybiphenyl;
Dihydroxynaphthalenes, e.g., 2,2'-dihydroxy-1,1'-binaphthyl, 1,2-dihydroxynaphthalene, 1,3-dihydroxynaphthalene, 2,3-dihydroxynaphthalene, 1,6-dihydroxynaphthalene, 2,6-dihydroxynaphthalene, 1,7-dihydroxynaphthalene, and 2,7-dihydroxynaphthalene;
Dihydroxydiaryl ethers, e.g., 2,2'-dihydroxydiphenyl ether, 3,3'-dihydroxydiphenyl ether, 4,4'-dihydroxydiphenyl ether, 4,4'-dihydroxy-3,3'-dimethyldiphenyl ether, 1,4-bis(3-hydroxyphenoxy)benzene, and 1,3-bis(4-hydroxyphenoxy)benzene;
Bis (hydroxyaryl)alkanes such as 2,2-bis(4-hydroxyphenyl)propane (i.e., bisphenol A), 1,1-bis(4-hydroxyphenyl) propane, 2,2-bis(3-methyl-4-hydroxyphenyl)propane (i.e., bisphenol C), 2,2-bis(3-methoxy-4-hydroxyphenyl)propane, 2-(4-hydroxyphenyl)-2-(3-methoxy-4-hydroxyphenyl)propane, 1,1-bis(3-tert-butyl-4-hydroxyphenyl)propane, 2,2-bis(3,5-dimethyl-4-hydroxyphenyl)propane, 2,2-bis(3-cyclohexyl-4-hydroxyphenyl)propane, 2-(4-hydroxyphenyl)-2-(3-cyclohexyl-4-hydroxyphenyl)propane, $\alpha,\alpha'$-bis(4-hydroxyphenyl)-1,4-diisopropylbenzene, 1,3-bis[2-(4-hydroxyphenyl)-2-propyl]benzene, bis(4-hydroxyphenyl)methane, bis(4-hydroxyphenyl)cyclohexylmethane, bis(4-hydroxyphenyl)phenylmethane, bis(4-hydroxyphenyl) (4-propenylphenyl)methane, bis(4-hydroxyphenyl)diphenylmethane, bis(4-hydroxyphenyl)naphthylmethane, 1,1-bis(4-hydroxyphenyl)ethane, 1,1-bis(4-hydroxyphenyl)-1-phenylethane, 1,1-bis(4-hydroxyphenyl)-1-naphthylethane, 1,1-bis(4-hydroxyphenyl)butane, 2,2-bis(4-hydroxyphenyl)butane, 2,2-bis(4-hydroxyphenyl)pentane, 1,1-bis(4-hydroxyphenyl)hexane, 2,2-bis(4-hydroxyphenyl)hexane, 1,1-bis(4-hydroxyphenyl)octane, 2,2-bis(4-hydroxyphenyl)octane, 4,4-bis(4-hydroxyphenyl)heptane, 2,2-bis(4-hydroxyphenyl)nonane, 1,1-bis(4-hydroxyphenyl)decane, and 1,1-bis(4-hydroxyphenyl)dodecane;
Bis(hydroxyaryl)cycloalkanes such as 1,1-bis(4-hydroxyphenyl)cyclopentane, 1,1-bis(4-hydroxyphenyl)cyclohexane, 1,1-bis(4-hydroxyphenyl)-3,3-dimethylcyclohexane, 1,1-bis(4-hydroxyphenyl)-3,4-dimethylcyclohexane, 1,1-bis(4-hydroxyphenyl)-3,5-dimethylcyclohexane, 1,1-bis(4-hydroxyphenyl)-3,3,5-trimethylcyclohexane, 1,1-bis(4-hydroxy-3,5-dimethylphenyl)-3,3,5-trimethylcyclohexane, 1,1-bis(4-hydroxyphenyl)-3-propyl-5-methylcyclohexane, 1,1-bis(4-hydroxyphenyl)-3-tert-butylcyclohexane, 1,1-bis(4-hydroxyphenyl)-4-tert-butylcyclohexane, 1,1-bis(4-hydroxyphenyl)-3-phenylcyclohexane, and 1,1-bis(4-hydroxyphenyl)-4-phenylcyclohexane;
cardo structure-containing bisphenols such as 9, 9-bis(4-hydroxyphenyl)fluorene and 9,9-bis(4-hydroxy-3-methylphenyl)fluorene;
Dihydroxydiaryl sulfides such as 4,4'-dihydroxydiphenyl sulfide and 4,4'-dihydroxy-3,3'-dimethyldiphenyl sulfide;
dihydroxydiaryl sulfoxides such as 4,4'-dihydroxydiphenyl sulfoxide and 4,4'-dihydroxy-3,3'-dimethyldiphenyl sulfoxide; and
dihydroxydiaryl sulfones such as 4,4'-dihydroxydiphenyl sulfone and 4,4'-dihydroxy-3,3'-dimethyldiphenyl sulfone.

Among the preceding, the bis(hydroxyaryl)alkanes are preferred and the bis(4-hydroxyphenyl)alkanes are preferred thereamong, while 2,2-bis(4-hydroxyphenyl)propane (i.e., bisphenol A) and 2,2-bis(3-methyl-4-hydroxyphenyl) propane (i.e., bisphenol C) are particularly preferred from the standpoints of impact resistance and heat resistance.

A single aromatic dihydroxy compound may be used or any combination of two or more in any ratio may be used.

Of the monomers comprising the starting materials for polycarbonate resin, the carbonate precursor can be exemplified by carbonyl halides and carbonate esters. A single carbonate precursor may be used or any combination of two or more in any ratio may be used.

The carbonyl halides can be specifically exemplified by phosgene and by haloformates such as the bischloroformates of dihydroxy compounds and the monochloroformates of dihydroxy compounds.

The carbonate esters can be specifically exemplified by diaryl carbonates such as diphenyl carbonate and ditolyl carbonate; dialkyl carbonates such as dimethyl carbonate and diethyl carbonate; and carbonates of dihydroxy compounds, e.g., biscarbonates of dihydroxy compounds, monocarbonates of dihydroxy compounds, and cyclic carbonates.

There are no particular limitations on the method of producing the polycarbonate resin (A), and any method can be used. Examples thereof are the interfacial polymerization method, melt transesterification method, pyridine method,

ring-opening polymerization of a cyclic carbonate compound, and solid-state transesterification of a prepolymer. Among these, polycarbonate resin (A) produced by interfacial polymerization or melt transesterification is preferred because this provides a greater improvement in the moist heat resistance, with interfacial polymerization being particularly preferred.

The molecular weight of the polycarbonate resin (A), expressed as the viscosity-average molecular weight (Mv) converted from the solution viscosity measured at a temperature of 25°C using methylene chloride as the solvent, is preferably 10,000 to 50,000, more preferably 10,000 to 40,000, still more preferably 10,000 to 30,000, and even more preferably 10,000 to 26,000, and is preferably at least 10,500, more preferably at least 11,000, particularly preferably at least 11,500, and most preferably at least 12,000, and preferably not more than 24,000 and particularly preferably not more than 20,000. The mechanical strength of the polycarbonate resin composition according to the present invention can be further improved by having the viscosity-average molecular weight be equal to or greater than the lower limit for the indicated range. By having the viscosity-average molecular weight be not more than the upper limit for the indicated range, reductions in the fluidity of the polycarbonate resin composition according to the present invention can be suppressed and thereby ameliorated, thus raising the molding processability and facilitating the execution of molding operations.

A mixture of two or more polycarbonate resin having different viscosity-average molecular weights may be used, in which case a polycarbonate resin having a viscosity-average molecular weight outside the aforementioned preferred range may be admixed.

The viscosity-average molecular weight [Mv] refers to the value calculated using Schnell's viscosity equation, i.e., $\eta = 1.23 \times 10^{-4} Mv^{0.83}$, wherein the intrinsic viscosity [η] (unit: dl/g) at a temperature of 25°C is determined using methylene chloride as the solvent and using a Ubbelohde viscometer. The intrinsic viscosity [η] is the value calculated using the following formula and the specific viscosity [$\eta_{sp}$] measured at each solution concentration [C] (g/dl).

[Math. 1]

$$\eta = \lim_{c \to 0} \eta_{sp} / \mathrm{c}$$

In addition, the polycarbonate resin (A) may contain a polycarbonate oligomer in order to bring about an improved appearance for the molded article and an improvement in the fluidity. The viscosity-average molecular weight [Mv] of this polycarbonate oligomer is generally at least 1,500 and is preferably at least 2,000 and is generally not more than 9,500 and is preferably not more than 9,000. The polycarbonate oligomer when containing is preferably not more than 30 mass% of the polycarbonate resin (including the polycarbonate oligomer).

The polycarbonate resin (A) may be not only a virgin starting material, but may be polycarbonate resin that has been regenerated from post-consumer products (also known as material-recycled polycarbonate resin), and also preferably contains both virgin starting material and recycled resin, and may be composed of recycled polycarbonate resin. The proportion of recycled polycarbonate resin in the polycarbonate resin (A) is preferably at least 40%, or at least 50%, or at least 60%, or at least 80%, and particularly preferably is 100%.

[Triaryl Phosphate (B)]

The polycarbonate resin composition according to the present invention contains the triaryl phosphate (B) given by general formula (1). In the present Description, aryl group denotes a group that contains a monocyclic or polycyclic aromatic group, and particularly preferably denotes the phenyl group.

[C2]

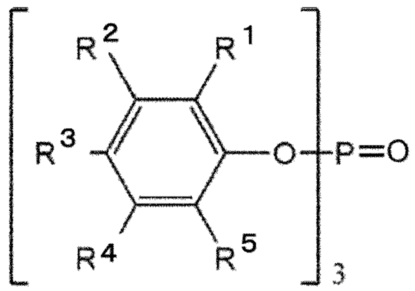

(1)

The $R^1$ to $R^5$ in formula (1) are each independently a hydrogen atom or $C_{1-12}$ alkyl group. The $C_{1-12}$ alkyl group is preferably a $C_{1-8}$ alkyl group, for which preferred examples are the methyl group, ethyl group, propyl group, n-butyl group, tert-butyl group, pentyl group, hexyl group, heptyl group, and octyl group. Among these, $C_{1-6}$ alkyl groups are preferred and $C_{1-4}$ alkyl groups are particularly preferred.

When two or more of the $R^1$ to $R^5$ on the three aromatic rings in formula (1) are an alkyl group, these alkyl groups may each be the same or may differ from one another.

In a preferred triaryl phosphate (B), in formula (1) at least one or more of the $R^1$ to $R^5$ on each aromatic ring is a $C_{1-12}$ alkyl group.

In addition, it is more preferred that the $R^1$ and $R^3$ on each aromatic ring are a $C_{1-12}$ alkyl group and the $R^2$, $R^4$, and $R^5$ on each aromatic ring are a hydrogen atom.

Specific examples of the triaryl phosphate (B) are triphenyl phosphate, tricresyl phosphate, trixylenyl phosphate, cresyl diphenyl phosphate, cresyl 2,6-dixylenyl phosphate, dicresyl phenyl phosphate, ethylphenyl diphenyl phosphate, diethylphenyl phenyl phosphate, propylphenyl diphenyl phosphate, dipropylphenyl phenyl phosphate, tripropylphenyl phosphate, butylphenyl diphenyl phosphate, dibutylphenyl phenyl phosphate, tributylphenyl phosphate, and so forth.

Among the preceding, in preferred triaryl phosphates (B) the $R^1$ and $R^3$ on each aromatic ring in formula (1) are the tert-butyl group and the $R^2$, $R^4$, and $R^5$ on each aromatic ring are a hydrogen atom. Tris(2,4-di-tert-butylphenyl) phosphate is particularly preferred.

A single species of triaryl phosphate (B) may be used by itself, or two or more species may be used in combination.

The content of the triaryl phosphate (B) is 0.001 to 0.3 parts by mass relative to 100 parts by mass of the polycarbonate resin (A). The resin composition containing such an amount has a favorable hue and also an excellent resistance to moist heat discoloration. The content of the triaryl phosphate (B) is preferably at least 0.002 parts by mass, more preferably at least 0.003 parts by mass or at least 0.004 parts by mass, and particularly preferably at least 0.005 parts by mass, and is preferably not more than 0.25 parts by mass, more preferably not more than 0.2 parts by mass, or not more than 0.15 parts by mass, or not more than 0.13 parts by mass, and particularly preferably not more than 0.1 parts by mass.

[Phenolic Structure-Bearing Compound (C)]

The polycarbonate resin composition according to the present invention contains 0.0012 to 0.12 parts by mass of a phenolic structure-bearing compound (C) relative to 100 parts by mass of the polycarbonate resin (A).

The phenolic structure-bearing compound (C) contains at least one selected from 2,4-di-tert-butylphenol, 2,2-bis(4-hydroxyphenyl)propane, 4-tert-butylphenol, and cumylphenol. Additional improvements in the hue and resistance to moist heat discoloration can be brought about by containing of the phenolic structure-bearing compound (C) in conjunction with the triaryl phosphate (B).

For the case of containing of 2,4-di-tert-butylphenol, its content is 0.0012 to 0.12 parts by mass relative to 100 parts by mass of the polycarbonate resin (A). Additional improvements in the hue and resistance to moist heat discoloration can be brought about by containing of 2,4-di-tert-butylphenol in such an amount in conjunction with the triaryl phosphate (B). The content of the 2,4-di-tert-butylphenol is preferably at least 0.002 parts by mass, more preferably at least 0.003 parts by mass or at least 0.004 parts by mass, and particularly preferably at least 0.005 parts by mass, and is preferably not more than 0.10 parts by mass, more preferably not more than 0.08 parts by mass, still more preferably not more than 0.07 parts by mass, and particularly preferably not more than 0.06 parts by mass.

In the case of containing 2,2-bis(4-hydroxyphenyl)propane (i.e., bisphenol A), its content is 0.002 to 0.03 parts by mass relative to 100 parts by mass of the polycarbonate resin (A). A favorable hue and an even better resistance to moist heat discoloration can be obtained by containing in such an amount in conjunction with the triaryl phosphate (B). The content of the 2,2-bis(4-hydroxyphenyl)propane is preferably at least 0.003 parts by mass and more preferably at least 0.004 parts by mass and is preferably not more than 0.02 parts by mass.

In the case of containing of 4-tert-butylphenol, its content is 0.0012 to 0.01 parts by mass. A favorable hue and an even better resistance to moist heat discoloration can be obtained by containing in such an amount in conjunction with the triaryl phosphate (B). The content of the 4-tert-butylphenol is preferably at least 0.002 parts by mass and more preferably at least 0.003 parts by mass or at least 0.0035 parts by mass.

In the case of containing of cumylphenol [i.e., 2-(4-hydroxyphenyl)-2-phenylpropane, or 4-$\alpha$-cumylphenol], its content is 0.0012 to 0.01 parts by mass relative to 100 parts by mass of the polycarbonate resin (A).

The polycarbonate resin composition according to the present invention preferably also contains phenol as the phenolic structure-bearing compound (C) in addition to the at least one selected from 2,4-di-tert-butylphenol, 2,2-bis(4-hydroxyphenyl) propane, 4-tert-butylphenol, and cumylphenol. The amount of phenol in this case is preferably 0.0017 to 0.01 parts by mass relative to 100 parts by mass of the polycarbonate resin (A).

Among the preceding, 2,4-di-tert-butylphenol, 2,2-bis(4-hydroxyphenyl)propane, and 4-tert-butylphenol are preferred for the phenolic structure-bearing compound (C). At the amounts given in the preceding for these, a favorable

hue and a superior resistance to moist heat discoloration can be obtained by containing in conjunction with the triaryl phosphate (B).

[Tris(2,4-di-tert-butylphenyl) Phosphite]

The polycarbonate resin composition according to the present invention preferably further contains tris(2,4-di-tert-butylphenyl) phosphite at 0.001 to 0.3 parts by mass relative to 100 parts by mass of the polycarbonate resin (A). Additional improvements in the hue can be brought about by containing, in combination with the triaryl phosphate (B) and the phenolic structure-bearing compound (C), of tris(2,4-di-tert-butylphenyl) phosphite at such an amount.

The content of tris(2,4-di-tert-butylphenyl) phosphite is more preferably at least 0.002 parts by mass, still more preferably at least 0.003 parts by mass or at least 0.004 parts by mass, and particularly preferably at least 0.005 parts by mass, and is more preferably not more than 0.25 parts by mass, still more preferably not more than 0.2 parts by mass or not more than 0.15 parts by mass or not more than 0.13 parts by mass, and particularly preferably not more than 0.1 parts by mass.

[Arylphosphines, Arylphosphine Oxides]

The polycarbonate resin composition according to the present invention preferably also contains an arylphosphine or an arylphosphine oxide.

Preferred examples of the arylphosphine are triphenylphosphine, diphenylbutylphosphine, diphenyloctadecylphosphine, tris(p-tolyl)phosphine, tris(p-nonylphenyl) phosphine, tris(naphthyl)phosphine, diphenyl(hydroxymethyl) phosphine, diphenyl(acetoxymethyl)phosphine, diphenyl(β-ethylcarboxyethyl)phosphine, tris(p-chlorophenyl) phosphine, tris(p-fluorophenyl)phosphine, diphenylbenzylphosphine, diphenyl-β-cyanoethylphosphine, diphenyl(p-hydroxyphenyl)phosphine, diphenyl-1,4-dihydroxyphenyl-2-phosphine, and phenylnaphthylbenzylphosphine, with triarylphosphines being preferred, triphenylphosphine and tritolylphosphine being more preferred, and triphenylphosphine being particularly preferred.

When an arylphosphine is contained, its content is preferably 0.001 to 0.3 parts by mass relative to 100 parts by mass of the polycarbonate resin (A). At such an amount, the resin composition that also contains the triaryl phosphate (B) exhibits an even better hue and resistance to moist heat discoloration. The content of the arylphosphine is more preferably at least 0.005 parts by mass, still more preferably at least 0.008 parts by mass, and particularly preferably at least 0.01 parts by mass, and is more preferably not more than 0.25 parts by mass, still more preferably not more than 0.2 parts by mass, or not more than 0.15 parts by mass, or not more than 0.1 parts by mass, or not more than 0.05 parts by mass, and particularly preferably not more than 0.04 parts by mass.

The polycarbonate resin composition according to the present invention preferably also contains an arylphosphine oxide. Preferred examples of the arylphosphine oxide are triphenylphosphine oxide, diphenylbutylphosphine oxide, diphenyloctadecylphosphine oxide, tris(p-tolyl)phosphine oxide, tris(p-nonylphenyl)phosphine oxide, tris(naphthyl)phosphine oxide, diphenyl(hydroxymethyl)phosphine oxide, diphenyl(acetoxymethyl)phosphine oxide, diphenyl(β-ethylcarboxyethyl)phosphine oxide, tris(p-chlorophenyl)phosphine oxide, tris(p-fluorophenyl)phosphine oxide, diphenylbenzylphosphine oxide, diphenyl-β-cyanoethylphosphine oxide, diphenyl(p-hydroxyphenyl)phosphine oxide, diphenyl-1,4-dihydroxyphenyl-2-phosphine oxide, and phenylnaphthylbenzylphosphine oxide, with triarylphosphine oxides being preferred and triphenylphosphine oxide being particularly preferred.

When an arylphosphine oxide is contained, its content is preferably 0.001 to 0.3 parts by mass relative to 100 parts by mass of the polycarbonate resin (A). At such an amount, the resin composition containing the combination with the triaryl phosphate (B) and each of the above-described components has a favorable hue and also exhibits an excellent resistance to moist heat discoloration. The content of the arylphosphine oxide is more preferably at least 0.002 parts by mass, still more preferably at least 0.003 parts by mass or at least 0.004 parts by mass, and particularly preferably at least 0.005 parts by mass, and is more preferably not more than 0.25 parts by mass, still more preferably not more than 0.2 parts by mass, or not more than 0.15 parts by mass, or not more than 0.13 parts by mass, and particularly preferably not more than 0.1 parts by mass.

[Polyalkylene Glycols]

The polycarbonate resin composition preferably also contains a polyalkylene glycol. The incorporation of a polyalkylene glycol can bring about additional improvements in the hue and can provide a favorable light transmittance.

The polyalkylene glycol is preferably a polyalkylene glycol that has at least one or two or more units selected from the tetramethylene glycol unit, (1-methyl)ethylene glycol unit, (1-ethyl)ethylene glycol unit, trimethylene glycol unit, and ethylene glycol unit, and the incorporation as a copolymer provided by the copolymerization of at least two or more units is preferred.

In addition, the terminal groups of the polyalkylene glycol are preferably the hydroxyl group. Moreover, no effect on the exhibited properties is seen even for derivatives in which one terminal or both terminals of a polyalkylene glycol are blocked by, e.g., an alkyl ether, aryl ether, aralkyl ether, fatty acid ester, aryl ester, and so forth, and the etherized polyalkylene glycol or esterified polyalkylene glycol may be similarly used.

The alkyl group constituting the alkyl ether may be straight chain or branched and is a $C_{1-22}$ alkyl group, for example, the methyl group, ethyl group, propyl group, butyl group, octyl group, lauryl group, stearyl group, and so forth; preferred examples are the methyl ether, ethyl ether, butyl ether, lauryl ether, stearyl ether, and so forth, of polyalkylene glycols.

The aryl group constituting the aryl ether is preferably a $C_{6-22}$, more preferably $C_{6-12}$, and still more preferably $C_{6-10}$ aryl group, for example, the phenyl group, tolyl group, naphthyl group, and so forth, with the phenyl group and tolyl group being preferred.

The aralkyl group constituting the aralkyl ether is preferably a $C_{7-23}$, more preferably $C_{7-13}$, and still more preferably $C_{7-11}$ aralkyl group, for example, the benzyl group, phenethyl group, and so forth, with the benzyl group being particularly preferred.

The fatty acid constituting the fatty acid ester may be straight chain or branched and may be a saturated fatty acid or an unsaturated fatty acid.

The fatty acid constituting the fatty acid ester is a monobasic or dibasic $C_{1-22}$ fatty acid and is exemplified by the following: monobasic saturated fatty acids, e.g., formic acid, acetic acid, propionic acid, butyric acid, valeric acid, caproic acid, enanthoic acid, caprylic acid, capric acid, lauric acid, myristic acid, pentadecylic acid, palmitic acid, heptadecylic acid, stearic acid, nonadecanoic acid, arachidic acid, and behenic acid; monobasic unsaturated fatty acids, e.g., unsaturated fatty acids such as oleic acid, elaidic acid, linoleic acid, linolenic acid, and arachidonic acid; and dibasic fatty acids having at least 10 carbons, e.g., sebacic acid, undecanedioic acid, dodecanedioic acid, tetradecanedioic acid, and thapsic acid, and decenedioic acid, undecenedioic acid, and dodecenedioic acid.

The aryl group constituting the aryl ester is preferably a $C_{6-22}$, more preferably $C_{6-12}$, and still more preferably $C_{6-10}$ aryl group, for example, the phenyl group, tolyl group, naphthyl group, and so forth, with the phenyl group and tolyl group being preferred. Even when the endblocking group is an aralkyl group, the same actions as for an aryl group can be realized since aralkyl groups exhibit a favorable compatibility with polycarbonates. The aralkyl group is preferably a $C_{7-23}$, more preferably $C_{7-13}$, and still more preferably $C_{7-11}$ aralkyl group, for example, the benzyl group, phenethyl group, and so forth, with the benzyl group being particularly preferred.

The number-average molecular weight of the polyalkylene glycol is preferably 200 to 10,000 and more preferably 500 to 5,000 and is more preferably at least 800, still more preferably at least 1,000, and particularly preferably at least 1,500, and more preferably not more than 4,500, still more preferably not more than 4,000, even more preferably not more than 3,500 or not more than 3,000, and particularly preferably not more than 2,500. Exceeding the upper limit on this range is unfavorable due to the decline in compatibility. Going below the lower limit on this range is unfavorable due to the occurrence of gas evolution during molding.

In this Description, the number-average molecular weight of the polyalkylene glycol is defined as the value calculated based on the hydroxyl value measured in accordance with JIS K 1577.

When a polyalkylene glycol is contained, its content is preferably 0.01 to 4 parts by mass relative to 100 parts by mass of the polycarbonate resin (A). When the polyalkylene glycol content exceeds 4 parts by mass, the transmittance readily declines due to cloudiness in the polycarbonate resin. The polyalkylene glycol content is more preferably at least 0.05 parts by mass, still more preferably at least 0.08 parts by mass or at least 0.1 parts by mass or at least 0.15 parts by mass, and particularly preferably at least 0.2 parts by mass, and is preferably not more than 3.5 parts by mass, more preferably not more than 3.0 parts by mass, and particularly not more than 2.5 parts by mass.

[Epoxy Compounds]

The polycarbonate resin composition according to the present invention preferably also contains an epoxy compound.

A compound having one or more epoxy groups in a single molecule is used as the epoxy compound. Preferred specific examples are as follows: phenyl glycidyl ether, allyl glycidyl ether, t-butylphenyl glycidyl ether, 3,4-epoxycyclohexylmethyl 3',4'-epoxycyclohexylcarboxylate, 3,4-epoxy-6-methylcyclohexylmethyl 3',4'-epoxy-6'-methylcyclohexylcarboxylate, 2,3-epoxycyclohexylmethyl 3',4'-epoxycyclohexylcarboxylate, 4-(3,4-epoxy-5-methylcyclohexyl)butyl 3',4'-epoxycyclohexylcarboxylate, 3,4-epoxycyclohexylethylene oxide, cyclohexylmethyl 3,4-epoxycyclohexylcarboxylate, 3,4-epoxy-6-methylcyclohexylmethyl 6'-methylcyclohexylcarboxylate, bisphenol A diglycidyl ether, tetrabromobisphenol A glycidyl ether, the diglycidyl ester of phthalic acid, the diglycidyl ester of hexahydrophthalic acid, bis-epoxydicyclopentadienyl ether, bis-epoxyethylene glycol, bis-epoxycyclohexyl adipate, butadiene diepoxide, tetraphenylethylene epoxide, octyl epoxy tallate, epoxidized polybutadiene, 3,4-dimethyl-1,2-epoxycyclohexane, 3,5-dimethyl-1,2-epoxycyclohexane, 3-methyl-5-t-butyl-1,2-epoxycyclohexane, octadecyl 2,2-dimethyl-3,4-epoxycyclohexylcarboxylate, N-butyl 2,2-dimethyl-3,4-epoxycyclohexylcarboxylate, cyclohexyl 2-methyl-3,4-epoxycyclohexylcarboxylate, N-butyl 2-isopropyl-3,4-epoxy-5-methylcyclohexylcarboxylate, octadecyl 3,4-epoxycyclohexylcarboxylate, 2-ethylhexyl 3',4'-epoxycyclohexylcarboxylate, 4,6-dimethyl-2,3-epoxycyclohexyl 3',4'-epoxycyclohexylcarboxylate, 4,5-epoxytetrahydrophthalic anhydride, 3-t-butyl-4,5-epoxytetrahydrophthalic anhydride, diethyl 4,5-epoxy-cis-1,2-cyclohexyldicarboxylate, di-n-butyl 3-t-butyl-4,5-epoxy-cis-1,2-cyclohexyldicarboxylate, epoxidized soy oil, and epoxidized linseed oil.

Among the preceding, the use of alicyclic epoxy compounds is preferred, and 3,4-epoxycyclohexylmethyl 3',4'-epoxycyclohexylcarboxylate is particularly preferred.

When an epoxy compound is contained, its content is preferably 0.001 to 0.3 parts by mass relative to 100 parts by mass of the polycarbonate resin (A). At such an amount, the resin composition containing the combination with the triaryl phosphate (B) and each of the above-described components has a favorable hue and also exhibits an excellent resistance to moist heat discoloration. The content of the epoxy compound is more preferably at least 0.005 parts by mass, still more preferably at least 0.008 parts by mass, and particularly preferably at least 0.01 parts by mass, and is more preferably not more than 0.25 parts by mass, still more preferably not more than 0.2 parts by mass, or not more than 0.15 parts by mass, or not more than 0.1 parts by mass, or not more than 0.07 parts by mass, or not more than 0.05 parts by mass, and particularly preferably not more than 0.04 parts by mass.

[Mold-Release Agents]

The resin composition according to the present invention preferably also contains a mold-release agent.

The mold-release agent can be exemplified by aliphatic carboxylic acids, aliphatic carboxylic acid/alcohol esters, aliphatic hydrocarbon compounds having a number-average molecular weight of 200 to 15,000, and polysiloxane silicone oils.

The aliphatic carboxylic acids can be exemplified by saturated or unsaturated monobasic, dibasic, or tribasic aliphatic carboxylic acids. The aliphatic carboxylic acids here also encompass alicyclic carboxylic acids. Among these, preferred aliphatic carboxylic acids are monobasic or dibasic carboxylic acids having 6 to 36 carbons, while saturated monobasic aliphatic carboxylic acids having 6 to 36 carbons are more preferred. Specific examples of these aliphatic carboxylic acids are palmitic acid, stearic acid, caproic acid, capric acid, lauric acid, arachidic acid, behenic acid, lignoceric acid, cerotic acid, melissic acid, tetratriacontanoic acid, montanic acid, adipic acid, and azelaic acid.

For example, the same aliphatic carboxylic acids as cited above can be used for the aliphatic carboxylic acid in the aliphatic carboxylic acid/alcohol ester. The alcohol, on the other hand, can be exemplified by saturated or unsaturated monohydric or polyhydric alcohols. These alcohols may have a substituent such as a fluorine atom, aryl group, and so forth. Among the preceding, monohydric or polyhydric saturated alcohols having not more than 30 carbons are preferred, while aliphatic saturated monohydric alcohols and aliphatic saturated polyhydric alcohols, in each case having not more than 30 carbons, are more preferred. Here, aliphatic is used as a term that also encompasses alicyclic compounds.

The alcohol under consideration can be specifically exemplified by the following: octanol, decanol, dodecanol, stearyl alcohol, behenyl alcohol, ethylene glycol, diethylene glycol, glycerol, pentaerythritol, 2,2-dihydroxyperfluoropropanol, neopentylene glycol, ditrimethylolpropane, and dipentaerythritol.

The ester may contain the aliphatic carboxylic acid and/or the alcohol as impurities. In addition, the ester may be a single compound or may be a mixture of a plurality of compounds. A single aliphatic carboxylic acid or any combination in any proportion of two or more may be used for the aliphatic carboxylic acid constituting one ester by bonding therein, and a single alcohol or any combination in any proportion of two or more may be used for the alcohol constituting one ester by bonding therein.

Specific examples of the aliphatic carboxylic acid/alcohol esters are beeswax (a mixture in which melissyl palmitate is the main component), stearyl stearate, behenyl behenate, stearyl behenate, glycerol monopalmitate, glycerol monostearate, glycerol distearate, glycerol tristearate, pentaerythritol monopalmitate, pentaerythritol monostearate, pentaerythritol distearate, pentaerythritol tristearate, and pentaerythritol tetrastearate.

The aliphatic hydrocarbon having a number-average molecular weight of 200 to 15,000 can be exemplified by liquid paraffin, paraffin wax, microwax, polyethylene wax, Fischer-Tropsch waxes, and oligomers of $C_{3-12}$ $\alpha$-olefins. This aliphatic hydrocarbon also encompasses alicyclic hydrocarbons. These hydrocarbons may be partially oxidized.

Among the preceding, paraffin waxes, polyethylene waxes, and partially oxidized polyethylene waxes are preferred, with paraffin waxes and polyethylene waxes being more preferred.

The number-average molecular weight of the aliphatic hydrocarbon is preferably not more than 5,000.

The aliphatic hydrocarbon may be a single substance; however, a mixture of aliphatic hydrocarbons having various constituent components and/or molecular weights may be used as long as the major component is in the range indicated above.

The polysiloxane silicone oil can be exemplified by dimethylsilicone oil, methylphenylsilicone oil, diphenylsilicone oil, fluoroalkylsilicone, and so forth.

A single mold-release agent as described above may be contained or any combination of two or more in any ratio may be contained.

The content of the mold-release agent, relative to 100 parts by mass of the polycarbonate resin (A), is generally at least 0.001 parts by mass and is preferably at least 0.01 parts by mass and is generally not more than 2 parts by mass, preferably not more than 1 parts by mass, and more preferably not more than 0.5 parts by mass. The mold release effect may be unsatisfactory when the content of the mold-release agent is below the lower limit for the indicated range. On the other hand, when the content of the mold-release agent exceeds the upper limit for the indicated range, the hydrolysis resistance may be lowered and mold contamination during injection molding and so forth may be produced.

[Ultraviolet Absorbers]

The polycarbonate resin composition according to the present invention preferably also contains an ultraviolet absorber.

The ultraviolet absorber can be exemplified by inorganic ultraviolet absorbers such as cerium oxide and zinc oxide and by organic ultraviolet absorbers such as benzotriazole compounds, benzophenone compounds, salicylate compounds, cyanoacrylate compounds, triazine compounds, oxanilide compounds, malonate ester compounds, and hindered amine compounds. Among the preceding, organic ultraviolet absorbers are preferred and benzotriazole compounds are more preferred. By containing an organic ultraviolet absorber, the resin composition according to the present invention may be provided with a favorable transparency and favorable mechanical properties.

The benzotriazole compounds can be specifically exemplified by 2-(2'-hydroxy-5'-methylphenyl)benzotriazole, 2-[2'-hydroxy-3',5'-bis($\alpha$,$\alpha$-dimethylbenzyl)phenyl]benzotriazole, 2-(2'-hydroxy-3',5'-di-tert-butylphenyl)benzotriazole, 2-(2'-hydroxy-3'-tert-butyl-5'-methylphenyl)-5-chlorobenzotriazole, 2-(2'-hydroxy-3',5'-di-tert-butylphenyl)-5-chlorobenzotriazole, 2-(2'-hydroxy-3',5'-di-tert-amyl)benzotriazole, 2-(2'-hydroxy-5'-tert-octylphenyl)benzotriazole, and 2,2'-methylenebis[4-(1,1,3,3-tetramethylbutyl)-6-(2H-benzotriazol-2-yl)phenol], among which 2-(2'-hydroxy-5'-tert-octylphenyl)benzotriazole and 2,2'-methylenebis[4-(1,1,3,3-tetramethylbutyl)-6-(2H-benzotriazol-2-yl)phenol] are preferred and 2-(2'-hydroxy-5'-tert-octylphenyl)benzotriazole is particularly preferred.

The benzophenone compounds can be specifically exemplified by 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-n-dodecyloxybenzophenone, bis(5-benzoyl-4-hydroxy-2-methoxyphenyl)methane, 2,2'-dihydroxy-4-methoxybenzophenone, and 2,2'-dihydroxy-4,4'-dimethoxybenzophenone.

The salicylate compounds can be specifically exemplified by phenyl salicylate and 4-tert-butylphenyl salicylate.

The cyanoacrylate compounds can be specifically exemplified by ethyl 2-cyano-3,3-diphenylacrylate and 2-ethylhexyl 2-cyano-3,3-diphenylacrylate.

The oxanilide compounds can be specifically exemplified by 2-ethoxy-2'-ethyloxalic acid bisanilide.

The malonate ester compound is preferably an ester of 2-(alkylidene)malonic acid with esters of 2-(1-arylalkylidene)malonic acid being more preferred.

When an ultraviolet absorber is contained, its content, expressed relative to 100 parts by mass of the polycarbonate resin (A), is generally at least 0.05 parts by mass and preferably at least 0.1 parts by mass and is generally not more than 1 parts by mass and preferably not more than 0.5 parts by mass. The improvement in the weathering resistance and light resistance may not be adequate when the content of the ultraviolet absorber is less than the lower limit on the indicated range, while, e.g., mold deposits and so forth may be produced and mold contamination may be caused when the content of the ultraviolet absorber exceeds the upper limit on the indicated range.

A single ultraviolet absorber may be contained or any combination of two or more in any ratio may be contained.

[Additives, etc.]

The polycarbonate resin composition according to the present invention may contain additives other than those described above, for example, additives such as fluorescent brighteners, pigments, dyes, flame retardants, impact resistance enhancers, plasticizers, compatibilizers, and so forth. A single one of these additives or two or more of these additives may be contained. The polycarbonate resin composition may contain a filler, especially a fibrous filler, and the content thereof is preferably less than 5 parts by mass relative to 100 parts by mass of the polycarbonate resin (A).

Resin other than the polycarbonate resin (A) may also be contained. Such additional resin can be exemplified by thermoplastic polyester resin, e.g., polyethylene terephthalate, polytrimethylene terephthalate, and polybutylene terephthalate; styrenic resin such as polystyrene resin, high-impact polystyrene resin (HIPS), and acrylonitrile-styrene copolymers (AS resin); polyolefin resin such as polyethylene resin and polypropylene resin; polyamide resin; polyimide resin; polyetherimide resin; polyurethane resin; polyphenylene ether resin; polyphenylene sulfide resin; polysulfone resin; and polymethacrylate resin. ABS resin and polybutylene terephthalate resin are particularly preferred for the additional resin.

[Polycarbonate Resin Composition]

The polycarbonate resin composition according to the present invention has an excellent resistance to moist heat discoloration, and, as a consequence, upon testing a 3 mm-thick test specimen for 100 hours in a pressure cooker tester (PCT), the difference ΔYI between YI in the thickness direction (3 mmt) after the test (post-PCT YI) and YI before the test (initial YI), i.e., (post-PCT YI) - (initial YI), is preferably not more than 1.6, more preferably not more than 1.5, still more preferably not more than 1.3, and particularly not more than 0.8.

The details of the method for measuring ΔYI are described in the examples.

[Examples]

The following was performed in order to confirm the effects of the polycarbonate resin composition according to the present invention, but the present invention is not to be understood as being limited to or by the examples that follow.

The following Table 1 provides the components that were used.

[Table 1]

| Component | Simbol | |
|---|---|---|
| PC resin (A) | A1 | Aromatic polycarbonate resin obtained by interfacial polymerization method with bisphenol A as starting material<br>"H-4000F" by Mitsubishi Engineering-Plastics Corporation, Mv:16,000<br>2,4-di-tert-butylphenol content:none<br>Bisphenol A content:0.0004 wt%<br>4-tert-butylphenol content:0.0010 wt%<br>Cumylphenol content:none, Phenol content:none |
| | A2 | Recycled aromatic polycarbonate resin, recovered from market<br>"PC-50S" by Ningbo Xuri Hongyu Technology Co, Mv:16,000<br>2,4-di-tert-butylphenol content:0.0010 wt%<br>Bisphenol A content:0.0017 wt%<br>4-tert-butylphenol content:0.0004 wt%<br>Cumylphenol content:none, Phenol content:none |
| | A3 | Aromatic polycarbonate resin obtained by interfacial polymerization method with bisphenol A as starting material<br>"S-3000F" by Mitsubishi Engineering-Plastics Corporation, Mv:22,000<br>2,4-di-tert-butylphenol content:none<br>Bisphenol A content:0.0005 wt%<br>4-tert-butylphenol content:0.0011 wt%<br>Cumylphenol content:none, Phenol content:none |
| Triaryl phosphate (B) | B1 | Tris(2,4-di-tert-butylphenyl) phosphate by Toronto Research Chemicals Inc. |
| | B2 | Triphenyl phosphate by Tokyo Chemical Industry Co. |
| | B3 | Tri-o-cresyl phosphate by Tokyo Chemical Industry Co. |
| | B4 | Tri-m-cresyl phosphate by Tokyo Chemical Industry Co. |
| | B5 | Tri-p-cresyl phosphate by Tokyo Chemical Industry Co. |
| | B6 | Tris(4-tert-butylphenyl) phosphate<br>by FUJIFILM Wako Pure Chemical Corporation |
| Other phosphate | BX | Mixture of monostearyl acid phosphate and distearyl acid phosphate "Adeka Stab AX-71" by ADEKA Corporation |

(continued)

| Component | Simbol | |
|---|---|---|
| Phenolic structure-bearing compound (C) | C1 | 2,4-di-tert-butylphenol by Tokyo Chemical Industry Co. |
| | C2 | 2,2-bis(4-hydroxyphenyl)propane by Tokyo Chemical Industry Co. |
| | C3 | 4-tert-butylphenol by Tokyo Chemical Industry Co. |
| | C4 | Cumylphenol by Tokyo Chemical Industry Co. |
| | C5 | Phenol by Tokyo Chemical Industry Co. |
| Phosphite | D | Tris(2,4-di-tert-butylphenyl) phosphite<br>"Irgafos 168" by BASF |
| Others | E1 | Polytrimethylene glycol represented by HO-$(CH_2CH_2CH_2O)_m$-H<br>"Velvetol H2000" by Allessa GmbH, Mn:2,000 |
| | E2 | Polyalkylene glycol copolymer given by<br>HO-$(CH_2CH_2CH_2CH_2O)_m$-/-$(CH_2CH(CH_3)O)_n$-H<br>"Polycerin DCB-2000" by NOF Corporation, Mn:2,000<br>m/n molar ratio:61.7/38.3 |
| | E3 | Triphenylphosphine by FUJIFILM Wako Pure Chemical Corporation |
| | E4 | Triphenylphosphine oxide by FUJIFILM Wako Pure Chemical Corporation |
| | E5 | Epoxy compound "Celloxide 2021P" by Daicel Corporation 3,4-epoxycyclohexylmethyl 3',4'-epoxycyclohexanecarboxylate |
| | E6 | Mold-release agent, pentaerythritol tetrastearate<br>"Loxiol VPG-861" by Cognis Oleochemical Japan Ltd. |

(Examples 1 to 31 and Comparative Examples 1 to 22)

The components specified above were blended in the proportions (parts by mass) indicated in the following Table 2 et seq. and were mixed for 20 minutes with a tumbler; this was followed by melt kneading at a cylinder temperature of 240°C with a vented single-screw extruder having a screw diameter of 40 mm ("VS-40" from Tanabe Plastics Machinery Co., Ltd.) and pellet production by strand cutting.

The obtained pellets were dried for 5 hours at 120°C using a hot air circulation dryer, and a three-step plate having regions with a thickness of 1.0 mm, 2.0 mm, and 3.0 mm, respectively, was then molded at a resin temperature of 280°C and a mold temperature of 80°C using an injection molder ("J55AD" from The Japan Steel Works, Ltd.). The injection molding was carried out using the following conditions.

Screw rotation rate: 100 rpm
Back pressure (gauge pressure): 10 MPa
Injection hold time: 10 sec
Cooling time: 20 sec

YI in the thickness direction (initial YI) was measured in the 3.0 mm-thick region of the three-step plate. The measurement was carried out using an "SE-6000" color difference meter from Nippon Denshoku Industries Co., Ltd. based on JIS K 7105. The light source was set to C and the visual field was set to 2°.

This three-step plate was then held for 100 hours in a pressure cooker tester (PCT) at a temperature of 121°C, a humidity of 100%, and a gauge pressure of 0.1 MPa; this was followed by measurement of YI (post-PCT YI) using the same procedure and by the determination of ΔYI using the following formula. An "EHS-212MD" from the ESPEC Corporation was used for the PCT.

$$\Delta YI = (\text{post-PCT YI}) - (\text{initial YI})$$

The results of this evaluation are given in the following Table 2 et seq.

The "foaming" in the following tables indicates that foaming occurred in the interior of the test specimen during the PCT test, resulting in swelling and an inability to measure ΔYI.

[Table 2]

| | | Example | | | | | Comparative Example | | | | | |
|---|---|---|---|---|---|---|---|---|---|---|---|---|
| | | 1 | 2 | 3 | 4 | 5 | 1 | 2 | 3 | 4 | 5 | 6 |
| PC resin (A) | A1 | 100 | 100 | 100 | 100 | 100 | 100 | 100 | 100 | 100 | 100 | 100 |
| | A2 | | | | | | | | | | | |
| | A3 | | | | | | | | | | | |
| Triaryl phosphate (B) | B1 | 0.05 | 0.05 | 0.05 | 0.05 | 0.05 | 0.05 | 0.05 | 0.05 | 0.05 | 0.0001 | 1 |
| | B2 | | | | | | | | | | | |
| | B3 | | | | | | | | | | | |
| | B4 | | | | | | | | | | | |
| | B5 | | | | | | | | | | | |
| | B6 | | | | | | | | | | | |
| Other phosphate | BX | | | | | | | | | | | |
| Phenolic structure-bearing compound(C) | C1 | 0.05 | 0.05 | 0.05 | 0.05 | 0.05 | | | | | | |
| | C2 | | | | | | | | | | | |
| | C3 | | | | | | | | | | | |
| | C4 | | | | | | | | | | | |
| | C5 | | | | | | | | | | | |
| Phosphite | D | | | | | 0.05 | | | | 0.05 | | |
| Others | E1 | | 0.10 | | | | | 0.10 | | | | |
| | E2 | | | 0.10 | 1.0 | | | | 1.0 | | | |
| | E3 | | | | | | | | | | | |
| | E4 | | | | | | | | | | | |
| | E5 | | | | | | | | | | | |
| | E6 | | | | | | | | | | | |
| YI (3 mm) | | 1.2 | 0.8 | 0.8 | 0.6 | 1.1 | 1.3 | 0.9 | 0.7 | 1.1 | 1.7 | 1.8 |
| ΔYI (3 mm) | | 0.6 | 0.7 | 0.5 | 0.7 | 0.9 | 0.9 | 1.0 | 1.1 | 1.5 | 1.7 | Foaming |
| Content of (C) in the composition | | | | | | | | | | | | |

(continued)

| | Example | | | | | Comparative Example | | | | | |
|---|---|---|---|---|---|---|---|---|---|---|---|
| | 1 | 2 | 3 | 4 | 5 | 1 | 2 | 3 | 4 | 5 | 6 |
| 2,4-di-tert-butylphenol | 0.0450 | 0.0450 | 0.0450 | 0.0450 | 0.0450 | 0.0000 | 0.0000 | 0.0000 | 0.0000 | 0.0000 | 0.0000 |
| Bisphenol A | 0.0004 | 0.0004 | 0.0004 | 0.0004 | 0.0004 | 0.0004 | 0.0004 | 0.0004 | 0.0004 | 0.0004 | 0.0004 |
| 4-tert-butylphenol | 0.0010 | 0.0010 | 0.0010 | 0.0010 | 0.0010 | 0.0010 | 0.0010 | 0.0010 | 0.0010 | 0.0010 | 0.0010 |
| 4-α-cumylphenol | 0.0000 | 0.0000 | 0.0000 | 0.0000 | 0.0000 | 0.0000 | 0.0000 | 0.0000 | 0.0000 | 0.0000 | 0.0000 |
| Phenol | 0.0000 | 0.0000 | 0.0000 | 0.0000 | 0.0000 | 0.0000 | 0.0000 | 0.0000 | 0.0000 | 0.0000 | 0.0000 |
| Total | 0.0464 | 0.0464 | 0.0464 | 0.0464 | 0.0464 | 0.0014 | 0.0014 | 0.0014 | 0.0014 | 0.0014 | 0.0014 |

[Table 3]

| | | Example | | | | Comp.Ex. | |
|---|---|---|---|---|---|---|---|
| | | 6 | 7 | 8 | 9 | 7 | 8 |
| PC resin (C) | A1 | 100 | 100 | 100 | 100 | 100 | 100 |
| | A2 | | | | | | |
| | A3 | | | | | | |
| Triaryl phosphate (B) | B1 | | | | | | |
| | B2 | 0.05 | 0.05 | 0.025 | 0.025 | 0.05 | 0.025 |
| | B3 | | | | | | |
| | B4 | | | | | | |
| | B5 | | | | | | |
| | B6 | | | | | | |
| Other phosphate | BX | | | | | | |
| Phenolic structure-bearing compound(C) | C1 | 0.05 | 0.01 | 0.025 | 0.01 | | |
| | C2 | | | | | | |
| | C3 | | | | | | |
| | C4 | | | | | | |
| | C5 | | | | | | |
| Phosphite | D | 0.05 | 0.025 | 0.025 | 0.05 | | 0.025 |
| Others | E1 | | | | | | |
| | E2 | | | | | | |
| | E3 | | | | | | |
| | E4 | | | | | | |
| | E5 | | | | | | |
| | E6 | | | | | | |
| YI (3 mm) | | 1.2 | 1.2 | 1.2 | 1.1 | 1.3 | 1.3 |
| ΔYI (3 mm) | | 0.8 | 1.1 | 0.5 | 0.6 | 0.3 | 0.9 |
| Content of (C) in the composition | | | | | | | |
| 2,4-di-tert butylphenol | | 0.0450 | 0.0090 | 0.0225 | 0.0090 | 0.0000 | 0.0000 |
| Bisphenol A | | 0.0004 | 0.0004 | 0.0004 | 0.0004 | 0.0004 | 0.0004 |
| 4-tert-butylphenol | | 0.0010 | 0.0010 | 0.0010 | 0.0010 | 0.0010 | 0.0010 |
| 4-α-cumylphenol | | 0.0000 | 0.0000 | 0.0000 | 0.0000 | 0.0000 | 0.0000 |
| Phenol | | 0.0000 | 0.0000 | 0.0000 | 0.0000 | 0.0000 | 0.0000 |
| Total | | 0.0464 | 0.0104 | 0.0239 | 0.0104 | 0.0014 | 0.0014 |

[Table 4]

| | | Ex.10 | Comp. Ex.9 | Ex.11 | Comp. EX.10 | Ex.12 | Comp. Ex.11 |
|---|---|---|---|---|---|---|---|
| PC resin (A) | A1 | 100 | 100 | | 100 | | 100 |
| | A2 | | | | | | |
| | A3 | | | | | | |

(continued)

| | | Ex.10 | Comp. Ex.9 | Ex.11 | Comp. EX.10 | Ex.12 | Comp. Ex.11 |
|---|---|---|---|---|---|---|---|
| Triaryl phosphate (B) | B1 | | | | | | |
| | B2 | | | | | | |
| | B3 | 0.05 | 0.05 | | | | |
| | B4 | | | 0.05 | 0.05 | | |
| | B5 | | | | | 0.05 | 0.05 |
| | B6 | | | | | | |
| Other phosphate | BX | | | | | | |
| Phenolic structure-bearing compound(C) | C1 | 0.025 | | 0.025 | | 0.025 | |
| | C2 | | | | | | |
| | C3 | | | | | | |
| | C4 | | | | | | |
| | C5 | | | | | | |
| Phosphite | D | | | | | | |
| Others | E1 | | | | | | |
| | E2 | | | | | | |
| | E3 | | | | | | |
| | E4 | | | | | | |
| | E5 | | | | | | |
| | E6 | | | | | | |
| YI (3 mm) | | 1.3 | 1.4 | 1.2 | 1.4 | 1.2 | 1.3 |
| ΔYI (3 mm) | | 0.7 | 1.0 | 0.6 | 0.8 | 0.7 | 0.9 |
| Content of (C) in the composition | | | | | | | |
| 2,4-di-tert-butylphenol | | 0.0225 | 0.0000 | 0.0225 | 0.0000 | 0.0225 | 0.0000 |
| Bisphenol A | | 0.0004 | 0.0004 | 0.0004 | 0.0004 | 0.0004 | 0.0004 |
| 4-tert-butylphenol | | 0.0010 | 0.0010 | 0.0010 | 0.0010 | 0.0010 | 0.0010 |
| 4-α-cumylphenol | | 0.0000 | 0.0000 | 0.0000 | 0.0000 | 0.0000 | 0.0000 |
| Phenol | | 0.0000 | 0.0000 | 0.0000 | 0.0000 | 0.0000 | 0.0000 |
| Total | | 0.0239 | 0.0014 | 0.0239 | 0.0014 | 0.0239 | 0.0014 |

[Table 5]

| | | Example | | | | | | | Comp.Ex. | |
|---|---|---|---|---|---|---|---|---|---|---|
| | | 13 | 14 | 15 | 16 | 17 | 18 | 19 | 12 | 13 |
| PC resin (A) | A1 | 100 | 100 | 100 | 100 | 100 | 100 | 100 | 100 | 100 |
| | A2 | | | | | | | | | |
| | A3 | | | | | | | | | |

(continued)

| | | Example | | | | | | | Comp.Ex. | |
|---|---|---|---|---|---|---|---|---|---|---|
| | | 13 | 14 | 15 | 16 | 17 | 18 | 19 | 12 | 13 |
| Triaryl phosphate (B) | B1 | | | | | | | | | |
| | B2 | | | | | | | | | |
| | B3 | | | | | | | | | |
| | B4 | | | | | | | | | |
| | B5 | | | | | | | | | |
| | B6 | 0.05 | 0.05 | 0.05 | 0.05 | 0.05 | 0.05 | 0.05 | 0.05 | 0.05 |
| Other Phosphate | BX | | | | | | | | | |
| Phenolic structure-bearing compound(C) | C1 | 0.01 | | | | 0.10 | 0.10 | 0.10 | | |
| | C2 | | 0.01 | | | 0.01 | | | | |
| | C3 | | | 0.002 | | | 0.002 | | | |
| | C4 | | | | 0.002 | | | 0.002 | | |
| | C5 | | | | | | | | | |
| Phosphite | D | | | | | | | | | 0.05 |
| Others | E1 | | | | | | | | | |
| | E2 | | | | | | | | | |
| | E3 | | | | | | | | | |
| | E4 | | | | | | | | 0.05 | |
| | E5 | | | | | | | | | |
| | E6 | | | | | | | | | |
| YI (3 mm) | | 1.2 | 1.4 | 1.4 | 1.4 | 1.3 | 1.1 | 1.2 | 1.5 | 1.1 |
| ΔYI (3 mm) | | 0.6 | 0.4 | 0.4 | 0.4 | 0.3 | 0.4 | 0.3 | 0.5 | 1.5 |
| Content of (C) in the composition | | | | | | | | | | |
| 2,4-di-tert-butylphenol | | 0.0090 | 0.0000 | 0.0000 | 0.0000 | 0.0900 | 0.0900 | 0.0900 | 0.0000 | 0.0000 |
| Bisphenol A | | 0.0004 | 0.0074 | 0.0004 | 0.0004 | 0.0074 | 0.0004 | 0.0004 | 0.0004 | 0.0004 |
| 4-tert-butylphenol | | 0.0010 | 0.0010 | 0.0029 | 0.0010 | 0.0010 | 0.0028 | 0.0010 | 0.0010 | 0.0010 |
| 4-α-cumylphenol | | 0.0000 | 0.0000 | 0.0000 | 0.0019 | 0.0000 | 0.0000 | 0.0018 | 0.0000 | 0.0000 |
| Phenol | | 0.0000 | 0.0000 | 0.0000 | 0.0000 | 0.0000 | 0.0000 | 0.0000 | 0.0000 | 0.0000 |
| Total | | 0.0104 | 0.0084 | 0.0033 | 0.0033 | 0.0984 | 0.0932 | 0.0932 | 0.0014 | 0.0014 |

[Table 6]

| | | Example | | | | Comp.Ex. | |
|---|---|---|---|---|---|---|---|
| | | 20 | 21 | 22 | 23 | 12 | 13 |
| PC resin (A) | A1 | 100 | 100 | 100 | 100 | 100 | 100 |
| | A2 | | | | | | |
| | A3 | | | | | | |

(continued)

| | | Example | | | | Comp.Ex. | |
|---|---|---|---|---|---|---|---|
| | | 20 | 21 | 22 | 23 | 12 | 13 |
| Triaryl phosphate (B) | B1 | | | | | | |
| | B2 | | | | | | |
| | B3 | | | | | | |
| | B4 | | | | | | |
| | B5 | | | | | | |
| | B6 | 0.05 | 0.05 | 0.05 | 0.05 | 0.05 | 0.05 |
| Other phosphate | BX | | | | | | |
| Phenolic structure-bearing compound(C) | C1 | 0.10 | 0.10 | 0.10 | 0.10 | | |
| | C2 | | | | | | |
| | C3 | | | | | | |
| | C4 | | | | | | |
| | C5 | | | | | | |
| Phosphite | D | | | | | | 0.05 |
| Others | E1 | | | | | | |
| | E2 | | | | | | |
| | E3 | 0.05 | | | | | |
| | E4 | | 0.05 | | | 0.05 | |
| | E5 | | | 0.03 | | | |
| | E6 | | | | 0.1 | | |
| YI (3 mm) | | 0.8 | 1.4 | 1.2 | 1.2 | 1.5 | 1.1 |
| ΔYI (3 mm) | | 0.7 | 0.3 | 0.2 | 0.7 | 0.5 | 1.5 |
| Content of (C) in the composition | | | | | | | |
| 2,4-di-tert-butylphenol | | 0.0900 | 0.0900 | 0.0900 | 0.0900 | 0.0000 | 0.0000 |
| Bisphenol A | | 0.0004 | 0.0004 | 0.0004 | 0.0004 | 0.0004 | 0.0004 |
| 4-tert-butylphenol | | 0.0010 | 0.0010 | 0.0010 | 0.0010 | 0.0010 | 0.0010 |
| 4-α-cumylphenol | | 0.0000 | 0.0000 | 0.0000 | 0.0000 | 0.0000 | 0.0000 |
| Phenol | | 0.0000 | 0.0000 | 0.0000 | 0.0000 | 0.0000 | 0.0000 |
| Total | | 0.0914 | 0.0914 | 0.0914 | 0.0914 | 0.0014 | 0.0014 |

[Table 7]

| | | Example | | | Comp.Ex. | |
|---|---|---|---|---|---|---|
| | | 24 | 25 | 26 | 12 | 13 |
| PC resin (A) | A1 | 100 | 100 | 100 | 100 | 100 |
| | A2 | | | | | |
| | A3 | | | | | |

(continued)

| | | Example | | | Comp.Ex. | |
|---|---|---|---|---|---|---|
| | | 24 | 25 | 26 | 12 | 13 |
| Triaryl phosphate (B) | B1 | | | | | |
| | B2 | | | | | |
| | B3 | | | | | |
| | B4 | | | | | |
| | B5 | | | | | |
| | B6 | 0.05 | 0.025 | 0.025 | 0.05 | 0.05 |
| Other phosphate | BX | | | | | |
| Phenolic structure-bearing compound(C) | C1 | 0.05 | 0.025 | 0.01 | | |
| | C2 | | | | | |
| | C3 | | | | | |
| | C4 | | | | | |
| | C5 | | | | | |
| Phosphite | D | 0.05 | 0.025 | 0.05 | | 0.05 |
| Others | E1 | | | | | |
| | E2 | | | | | |
| | E3 | | | | | |
| | E4 | | | | 0.05 | |
| | E5 | | | | | |
| | E6 | | | | | |
| YI (3 mm) | | 1.1 | 1.2 | 1.1 | 1.5 | 1.1 |
| ΔYI (3 mm) | | 0.9 | 0.5 | 1.4 | 0.5 | 1.5 |
| Content of (C) in the composition | | | | | | |
| 2,4-di-tert-butylphenol | | 0.0450 | 0.0225 | 0.0090 | 0.0000 | 0.0000 |
| Bisphenol A | | 0.0004 | 0.0004 | 0.0004 | 0.0004 | 0.0004 |
| 4-tert-butylphenol | | 0.0010 | 0.0010 | 0.0010 | 0.0010 | 0.0010 |
| 4-α-cumylphenol | | 0.0000 | 0.0000 | 0.0000 | 0.0000 | 0.0000 |
| Phenol | | 0.0000 | 0.0000 | 0.0000 | 0.0000 | 0.0000 |
| Total | | 0.0464 | 0.0239 | 0.0104 | 0.0014 | 0.0014 |

[Table 8]

| | | Example | | | Comp.Ex. | | | |
|---|---|---|---|---|---|---|---|---|
| | | 27 | 28 | 29 | 14 | 15 | 16 | 17 |
| PC resin (A) | A1 | | | | | 100 | 100 | 100 |
| | A2 | | | | | | | |
| | A3 | 100 | 100 | 100 | 100 | | | |

(continued)

| | | Example | | | Comp.Ex. | | | |
|---|---|---|---|---|---|---|---|---|
| | | 27 | 28 | 29 | 14 | 15 | 16 | 17 |
| Triaryl phosphate (B) | B1 | | | | | | | |
| | B2 | | | | | | | |
| | B3 | | | | | | | |
| | B4 | | | | | | | |
| | B5 | | | | | | | |
| | B6 | 0.05 | 0.05 | 0.05 | 0.05 | | | |
| Other phosphate | BX | | | | | 0.05 | | |
| Phenolic structure-bearing compound(C) | C1 | 0.025 | | | | | | 0.05 |
| | C2 | | 0.01 | | | | | |
| | C3 | | | 0.002 | | | | |
| | C4 | | | | | | | |
| | C5 | | | | | | | |
| Phosphite | D | | | | | | 0.05 | |
| Others | E1 | | | | | | | |
| | E2 | | | | | | | |
| | E3 | | | | | | | |
| | E4 | | | | | | | |
| | E5 | | | | | | | |
| | E6 | | | | | | | |
| YI (3 mm) | | 1.3 | 1.4 | 1.3 | 1.6 | 1.6 | 1.2 | 1.7 |
| ΔYI (3 mm) | | 0.6 | 0.8 | 0.7 | 1.0 | foaming | 1.8 | 0.4 |
| Content of (C) in the composition | | | | | | | | |
| 2,4-di-tert-butylphenol | | 0.0225 | 0.0000 | 0.0000 | 0.0000 | 0.0000 | 0.0000 | 0.0450 |
| Bisphenol A | | 0.0005 | 0.0074 | 0.0005 | 0.0005 | 0.0004 | 0.0004 | 0.0004 |
| 4-tert-butylphenol | | 0.0011 | 0.0011 | 0.0030 | 0.0011 | 0.0010 | 0.0010 | 0.0010 |
| 4-α-cumylphenol | | 0.0000 | 0.0000 | 0.0000 | 0.0000 | 0.0000 | 0.0000 | 0.0000 |
| Phenol | | 0.0000 | 0.0000 | 0.0000 | 0.0000 | 0.0000 | 0.0000 | 0.0000 |
| Total | | 0.0241 | 0.0085 | 0.0035 | 0.0016 | 0.0014 | 0.0014 | 0.0464 |

[Table 9]

| | | Example | | Comp.Ex. | | | | |
|---|---|---|---|---|---|---|---|---|
| | | 30 | 31 | 18 | 19 | 20 | 21 | 22 |
| PC resin (A) | A1 | | | | | | | |
| | A2 | 100 | 100 | 100 | 100 | 100 | 100 | 100 |

(continued)

| | | Example | | Comp.Ex. | | | | |
|---|---|---|---|---|---|---|---|---|
| | | 30 | 31 | 18 | 19 | 20 | 21 | 22 |
| Triaryl phosphate (B) | B1 | 0.05 | 0.05 | | | | 0.05 | 0.05 |
| | B2 | | | | | | | |
| | B3 | | | | | | | |
| | B4 | | | | | | | |
| | B5 | | | | | | | |
| | B6 | | | | | | | |
| Other phosphate | BX | | | | | | | |
| Phenolic structure-bearing compound(C) | C1 | 0.05 | 0.05 | | | 0.05 | | |
| | C2 | | | | | | | |
| | C3 | | | | | | | |
| | C4 | | | | | | | |
| | C5 | | | | | | | |
| Phosphite | D | | 0.05 | | 0.05 | | | 0.05 |
| Others | E1 | | | | | | | |
| | E2 | | | | | | | |
| | E3 | | | | | | | |
| | E4 | | | | | | | |
| | E5 | | | | | | | |
| | E6 | | | | | | | |
| YI (3 mm) | | 1.7 | 1.6 | 2.2 | 1.7 | 2.2 | 1.8 | 1.6 |
| ΔYI (3 mm) | | 0.3 | 0.5 | 2.2 | 2.3 | 0.7 | 0.6 | 1.1 |
| Content of (C) in the composition | | | | | | | | |
| 2,4-di-tert-butylphenol | | 0.0460 | 0.0460 | 0.0010 | 0.0010 | 0.0460 | 0.0010 | 0.0010 |
| Bisphenol A | | 0.0017 | 0.0017 | 0.0017 | 0.0017 | 0.0017 | 0.0017 | 0.0017 |
| 4-tert-butylphenol | | 0.0004 | 0.0004 | 0.0004 | 0.0004 | 0.0004 | 0.0004 | 0.0004 |
| 4-α-cumylphenol | | 0.0000 | 0.0000 | 0.0000 | 0.0000 | 0.0000 | 0.0000 | 0.0000 |
| Phenol | | 0.0000 | 0.0000 | 0.0000 | 0.0000 | 0.0000 | 0.0000 | 0.0000 |
| Total | | 0.0481 | 0.0481 | 0.0031 | 0.0031 | 0.0481 | 0.0031 | 0.0031 |

[Industrial Applicability]

The polycarbonate resin composition according to the present invention exhibits a favorable hue and an excellent resistance to moist heat discoloration and as a consequence can be advantageously used for various and diverse molded articles.

## Claims

**1.** A polycarbonate resin composition comprising, relative to 100 parts by mass of a polycarbonate resin (A), 0.001 to 0.3 parts by mass of a triaryl phosphate (B) given by general formula (1) below and 0.0012 to 0.12 parts by mass of a phenolic structure-bearing compound (C),

wherein the phenolic structure-bearing compound (C) comprises at least one selected from 2,4-di-tert-butylphenol, 2,2-bis(4-hydroxyphenyl)propane, 4-tert-butylphenol, and cumylphenol, and
wherein the content is, relative to 100 parts by mass of the polycarbonate resin (A), 0.0012 to 0.12 parts by mass when containing 2,4-di-tert-butylphenol, 0.002 to 0.03 parts by mass when containing 2,2-bis(4-hydroxyphenyl) propane, 0.0012 to 0.01 parts by mass when containing 4-tert-butylphenol, or 0.0012 to 0.01 parts by mass when containing cumylphenol.

[C1]

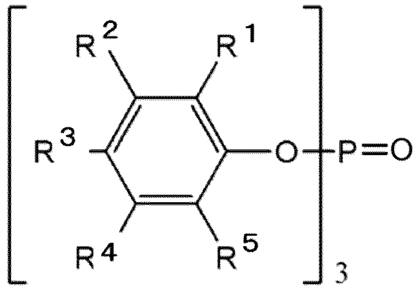

(1)

(In formula (1), $R^1$ to $R^5$ are each independently a hydrogen atom or a $C_{1-12}$ alkyl group.)

2. The polycarbonate resin composition of claim 1, wherein at least one of the $R^1$ to $R^5$ on each of aromatic rings in formula (1) is a $C_{1-12}$ alkyl group.

3. The polycarbonate resin composition of claim 1 or 2, wherein the $R^1$ and $R^3$ on each of the aromatic rings in formula (1) are a $C_{1-12}$ alkyl group, and the $R^2$, $R^4$ and $R^5$ on each of the aromatic rings are a hydrogen atom.

4. The polycarbonate resin composition of claim 3, wherein the $R^1$ and $R^3$ on each of the aromatic rings in formula (1) are a tert-butyl group, and the $R^2$, $R^4$ and $R^5$ on each of the aromatic rings are a hydrogen atom.

5. The polycarbonate resin composition of any one of claims 1 to 4, further comprising, per 100 parts by mass of the polycarbonate resin (A), 0.001 to 0.3 parts by mass of tris(2,4-di-tert-butylphenyl) phosphite.

6. The polycarbonate resin composition of any one of claims 1 to 5, further comprising 0.01 to 4.0 parts by mass of a polyalkylene glycol relative to 100 parts by mass of the polycarbonate resin (A).

7. The polycarbonate resin composition of any one of claims 1 to 6, further comprising 0.001 to 0.3 parts by mass of an arylphosphine or arylphosphine oxide relative to 100 parts by mass of the polycarbonate resin (A).

8. The polycarbonate resin composition of any one of claims 1 to 7, wherein the phenolic structure-bearing compound (C) further comprises 0.0017 to 0.01 parts by mass of phenol relative to 100 parts by mass of the polycarbonate resin (A), in addition to the at least one selected from 2,4-di-tert-butylphenol, 2,2-bis(4-hydroxyphenyl)propane, 4-tert-butylphenol, and cumylphenol.

9. A pellet comprising the polycarbonate resin composition of any one of claims 1 to 8.

10. A molded article comprising the polycarbonate resin composition of any one of claims 1 to 8.

11. A molded article provided by molding the pellet of claim 9.

## INTERNATIONAL SEARCH REPORT

International application No.
**PCT/JP2022/048267**

**A. CLASSIFICATION OF SUBJECT MATTER**

***C08L 69/00***(2006.01)i; ***C08K 5/13***(2006.01)i; ***C08K 5/521***(2006.01)i; ***C08K 5/524***(2006.01)i; ***C08L 63/00***(2006.01)i; ***C08L 71/02***(2006.01)i
FI: C08L69/00; C08K5/13; C08K5/521; C08K5/524; C08L63/00; C08L71/02

According to International Patent Classification (IPC) or to both national classification and IPC

**B. FIELDS SEARCHED**

Minimum documentation searched (classification system followed by classification symbols)

C08L69/00; C08K5/13; C08K5/521; C08K5/524; C08L63/00; C08L71/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2018/116607 A1 (MITSUBISHI ENGINEERING PLASTICS CORPORATION) 28 June 2018 (2018-06-28)<br>claims, examples, entire text | 1-11 |
| A | JP 07-003140 A (SUMITOMO DOW LTD) 06 January 1995 (1995-01-06)<br>claims, examples, entire text | 1-11 |
| A | WO 2021/059902 A1 (MITSUBISHI ENGINEERING PLASTICS CORPORATION) 01 April 2021 (2021-04-01)<br>claims, examples, entire text | 1-11 |
| A | JP 2004-115609 A (MITSUBISHI ENGINEERING PLASTICS CORPORATION) 15 April 2004 (2004-04-15)<br>claims, examples, entire text | 1-11 |

☐ Further documents are listed in the continuation of Box C.　　☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 February 2023** | **28 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (January 2015)

**INTERNATIONAL SEARCH REPORT**
**Information on patent family members**

International application No.
**PCT/JP2022/048267**

| Patent document cited in search report | Publication date (day/month/year) | Patent family member(s) | Publication date (day/month/year) |
|---|---|---|---|
| WO 2018/116607 A1 | 28 June 2018 | US 2020/0071519 A1<br>claims, examples, entire text<br>EP 3556809 A1<br>CN 110088200 A | |
| JP 07-003140 A | 06 January 1995 | (Family: none) | |
| WO 2021/059902 A1 | 01 April 2021 | CN 114466896 A<br>TW 202116918 A | |
| JP 2004-115609 A | 15 April 2004 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3308657 B